# EUROPÄISCHE PATENTSCHRIFT

(11) **EP 1 842 035 B1**
(45) Veröffentlichungstag und Bekanntmachung des Hinweises auf die Patenterteilung: **05.03.2014**
(21) Anmeldenummer: 06705811.5
(22) Anmeldetag: 19.01.2006
(51) Int. Cl.: G01F 1/46, G01P 5/165

(54) **STAUDRUCKSONDE**
DYNAMIC PRESSURE PROBE
SONDE A PRESSION DYNAMIQUE

(30) Priorität: 26.01.2005 DE 202005001314 U
(43) Veröffentlichungstag der Anmeldung: 10.10.2007
(73) Patentinhaber: systec Controls Mess- und Regeltechnik GmbH, 82178 Puchheim (DE)
(72) Erfinder: BETZ, Oliver, 82194 Gröbenzell (DE)
(74) Vertreter: Braun-Dullaeus, Karl-Ulrich
(86) Internationale Anmeldenummer: PCT/DE2006/000073
(87) Internationale Veröffentlichungsnummer: WO 2006/079314

(56) Entgegenhaltungen:
- WO-A-00/08452
- DE-A1- 2 842 676
- US-A- 4 703 661

## Beschreibung

### Technisches Gebiet

Die Erfindung betrifft eine Staudrucksonde, bei welcher in einem Staurohr Kanäle verlaufen. Diese Kanäle enden jeweils in einer oder mehreren Öffnungen. Zur Messung des Differentialdrucks eines strömenden Mediums wird das Staurohr so im strömenden Medium positioniert, dass und die Öffnungen des einen Kanals stromaufwärts gerichtet sind und die Öffnungen des anderen Kanals stromabwärts gerichtet sind.

Am anderen Ende des Staurohes laufen die Kanäle in einem Kopfstück mit quadratischem oder rechteckigem Querschnitt weiter.

Staudrucksonden werden eingesetzt um die Strömungsgeschwindigkeit von Gas, Dampf oder Flüssigkeit zu erfassen.

### Stand der Technik

Eine solche Staudrucksonde ist aus der EP 0198197 B1 und der DE 28 426 76 bekannt.

Die Verbindungslinie der Kanalachsen steht senkrecht zu einem Paar der Aussenflächen und verläuft parallel zum anderen Paar der Aussenflächen des Kopfstücks. Im Kopfstück befinden sich Bohrungen, die von gegenüberliegenden Seite aus jeweils einen Kanal treffen. Am Kopfstück sind Schraubstutzen anschließende Elemente befestigt. Bei diesen Elementen handelt es sich beispielsweise um Kondensatgefäße oder Rohrbögen.

Diesen Elementen nachgeordnet sind je Kanal Sensoren, die den Druck messen.

Nachteilig bei der bekannten Staudrucksonde ist die Notwendigkeit je nach Einbaulage und/oder Verlauf der Anschlussleitungen zusätzliche Adapter und/oder Rohrbögen zwischen Kopfstück der Sonde und den Sensoren anzubringen.

Bei Messungen von Flüssigkeiten ist es notwendig, dass der auf den Sensoren lastende statische Druck gleich ist. Dieser statische Druck entsteht durch die in den Adaptern und/oder Rundbögen und/oder sonstigen Anschlussleitungen stehende Flüssigkeitssäule.

Bei Messungen von Dampf ist es nötig, dass Kondensat aus dem Staudruckrohr wieder abfließen kann.

Die Messungen der unterschiedlichen Medien können an horizontal oder an vertikal verlaufenden Leitungen durchgeführt werden, woraus sich eine Vielzahl von Montagemöglichkeiten ergibt.

Es ist beim Stand der Technik nötig, für jede Montageart beide Kanäle die Adapter und/oder Rundbögen und/oder sonstigen Anschlussleitungen genau aufeinander angepasst zu verlegen, damit die Flüssigkeitssäule bei beiden Sensoren die gleiche Höhe hat.

### Offenbarung der Erfindung

### Technische Aufgabe

Es ist die Aufgabe der Erfindung eine universal einzusetzende Staudrucksonde zu schaffen, welche es ermöglicht, die unterschiedlichen Montagearten ohne aufwändige Adapter und / oder Rundbögen abzudecken.

### Technische Lösung

Die Erfindung löst diese Aufgabe durch eine Staudrucksonde, deren Kanäle in besonderer und erfinderischer Weise im Kopf der Staudrucksonde gemäß dem Anspruch 1 verlaufen.

Durch eine spezielle Ausgestaltung des Kopfes ist es möglich, jede beliebige Montageart mit einem standardisiertem Anschlusselement, welches dann situationsgerecht auf die individuelle Montageart in einer bestimmten Lage am Kopf befestigt wird zu realisieren.

### Vorteilhafte Wirkungen

Durch die Tatsache, dass nur ein standardisiertes Anschlusselement nötig ist wird vorteilhaft die Teilevielfalt reduziert.

Insbesondere der beim Stand der Technik erforderliche Aufwand zur Kalibrierung der Höhe für die Flüssigkeitssäule entfällt erfindungsgemäß.

### Kurze Beschreibung der Zeichnungen

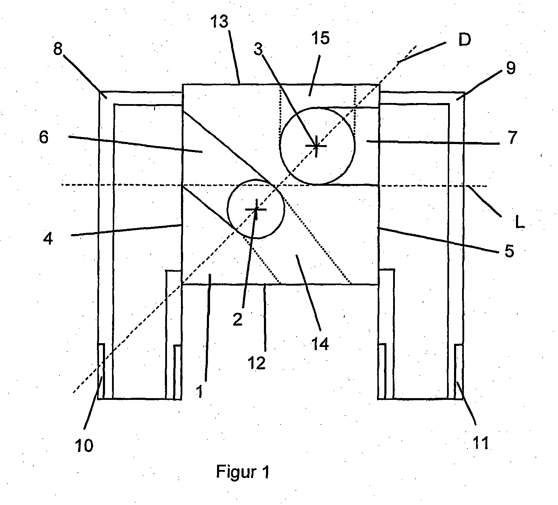

Die Figur 1 zeigt in Draufsicht einen Querschnitt durch den Kopf der erfindungsgemäßen Staudrucksonde.

### Ausführungsform(en) der Erfindung

Die Figur 1 zeigt einen Sondenkopf 1 mit rechteckigem Querschnitt. Im Kopf 1 verlaufen Kanäle 2, 3. Die Achsen der Kanäle 2, 3 liegen auf einer Linie die schräg gegenüberliegende Ecken des Kopfes 1 verbindet.

Diese Kanäle 2, 3 führen zu dem - hier nicht gezeigten - Teil der Sonde, der sich bei einer Messung innerhalb des strömenden Mediums befindet.

Von zwei gegenüberliegenden Außenflächen 4, 5 des Kopfes 1 aus verlaufen Bohrungen 6, 7 welche die Kanäle 2, 3 treffen.

An den Außenflächen 4, 5 sind Adapter 8, 9 befestigt, beispielsweise indem diese angeschweißt werden. Die Adapter 8, 9 sind vor dem Verschweißen in beliebigem Winkel - vorzugsweise in 90 Grad Schritten - um die Linie L drehbar positionierbar.

Hieraus ergibt sich eine hohe Flexibilität bei der Anpassung an die örtlichen Gegebenheiten, an denen die Sonde später eingesetzt werden soll.

Die Adapter ihrerseits weisen ein Gewinde 10, 11 auf. Die Adapter 8, 9 und Gewinde 8, 9 sind so dimensioniert, dass die Normmaße (54 mm Abstand) für den direkten Anschluss von Differentialdruck Messumformern eingehalten sind.

Dies vereinfacht zusätzlich die Gesamtmontage des Messsystems.

Die Flexibilität der erfindungsgemäßen Sonde im Hinblick auf die unterschiedlichsten Anschlussbedingungen wird zudem erhöht, als es auch möglich ist die Adapter anstatt an die Außenflächen 4, 5 an die Außenflächen 12, 13 zu befestigen.

Für diesen Fall werden die gepunktet dargestellten Bohrungen 14, 15 bis zu den Kanälen 2, 3 durchgeführt. Die Bohrungen 6, 7 sind dann nicht vorhanden.

Die Bohrungen 6, 7 und 14, 15 sind so gewählt, dass der Bohrungseingang auf gleichem Niveau liegt. Im gezeigten Beispiel liegt diese Niveau auf der Linie L.

Hierdurch wird erfinderisch automatisch erreicht, dass bei Messungen von strömenden Flüssigkeiten gleich hohe Flüssigkeitsäulen auf den beiden Seiten des Differentialdrucksensors lasten.

Bei der Messung von Dampf kondensiert der Dampf im Hohlraum der Adapter 8, 9 und mit der Zeit füllen sich auch bei einer Dampfmessung die Adapter 8, 9 mit Flüssigkeit bis zur Linie L und auf beiden Seiten des Differentialdrucksensors lastet die gleich hohe Flüssigkeitssäule.

### Gewerbliche Anwendbarkeit

Die Erfindung ist für die Messung der Geschwindigkeit fließender Medien in weiten Einsatzgebieten anwendbar.

## Patentansprüche

1. Staudrucksonde mit
- einem Sondenkopf, in welchem Kanäle verlaufen, die zu dem Teil der Sonde führen, der sich während einer Messung im zu messenden Medium befindet und
- an den Sondenkopf angebrachten Adaptern, wobei
der Sondenkopf (1) einen rechteckigen Querschnitt aufweist.
**dadurch gekennzeichnet, dass**
die Achsen der Kanäle (2, 3) auf einer zwischen zwei Ecken des Sondenkopfes (1) verlaufenden Diagonale (D) liegen.

2. Staudrucksonde nach Anspruch 1
**dadurch gekennzeichnet, dass**
die Lage der Kanäle so gewählt ist, dass die Kanäle (2, 3) von mindestens zwei Außenflächen (4, 5, 12, 13) des Sondenkopfes (1) durch Querbohrungen (6, 7, 14, 15) erreichbar sind.

3. Staudrucksonde nach Anspruch 2
**dadurch gekennzeichnet, dass**
die Bohrungen so verlaufen, dass der Bohrungsausgang von jeweils gegenüberliegenden Bohrungspaaren (6, 7) und (14, 15) auf gleichem Niveau liegen.

## Claims

1. A dynamic pressure probe with
- a probe head, in which channels run which lead to the part of the probe that is located during a measurement in the medium to be measured and
- adapters fitted to the probe head, wherein the probe head (1) has a rectangular cross-section,
**characterised in that**
the axes of the channels (2, 3) lie on a diagonal (D) running between two corners of the probe head (1).

2. The dynamic pressure probe according to claim 1,
**characterised in that**
the position of the channels is selected such that the channels (2, 3) can be reached by at least two outer surfaces (4, 5, 12, 13) of the probe head (1) by means of transverse bores (6, 7, 14, 15).

3. The dynamic pressure probe according to claim 2,
**characterised in that**
the bores run in such a way that the bore outlets from bore pairs (6, 7) and (14, 15) in each case lying mutually opposite lie at the same level.

## Revendications

1. Sonde de Pitot comportant :
- une tête de sonde, dans laquelle des canaux s'étendent, qui mènent à la partie de la sonde, qui se trouve immergée dans le milieu à mesurer pendant une mesure et
- des adaptateurs montés sur la tête de sonde, dans laquelle
la tête de sonde (1) présente une section transversale rectangulaire, **caractérisée en ce que** les axes des canaux (2,3) sont situés sur une diagonale (D) s'étendant entre deux coins de la tête de sonde (1).

2. Sonde de Pitot selon la revendication 1, **caractérisée en ce que** la position des canaux est choisie de telle sorte que les canaux (2,3) puissent être atteints par au moins deux surfaces extérieures (4,5,12,13) de la tête de sonde (1) à travers des alésages transversaux (6,7,14,15).

3. Sonde de Pitot selon la revendication 2, **caractérisée en ce que** les alésages s'étendent de telle sorte que la sortie d'alésage des paires d'alésages (6,7) et (14,15) respectivement opposées se trouvent au même niveau.
